# EUROPÄISCHE PATENTSCHRIFT

(11) **EP 2 914 081 B1**
(45) Veröffentlichungstag und Bekanntmachung des Hinweises auf die Patenterteilung: **31.07.2019**
(21) Anmeldenummer: 13805742.7
(22) Anmeldetag: 29.10.2013
(51) Int. Cl.: A01B 3/42

(54) **ANBAUDREHPFLUG MIT EINSCHWENKBEGRENZUNG**
MOUNTED HALF-TURN PLOUGH WITH RESTRICTED PIVOTING
CHARRUE DEMI-TOUR AVEC LIMITATION DE ROTATION

(30) Priorität: 30.10.2012 DE 102012021721
(43) Veröffentlichungstag der Anmeldung: 09.09.2015
(73) Patentinhaber: Lemken GmbH & Co. KG, 46519 Alpen (DE)
(72) Erfinder: MEURS, Wilhelm, 46519 Alpen (DE)
(74) Vertreter: Schulte & Schulte
(86) Internationale Anmeldenummer: PCT/DE2013/000639
(87) Internationale Veröffentlichungsnummer: WO 2014/067508

(56) Entgegenhaltungen:
- EP-A2- 0 200 489
- EP-A2- 1 252 806
- DE-U1- 29 600 075
- FR-A1- 2 517 506

## Beschreibung

Die Erfindung betrifft einen Anbaudrehpflug gemäß dem Oberbegriff des Patentanspruches 1.

Derartige Anbaudrehpflüge weisen einen in Arbeitsstellung schräg gestellten Pflugrahmen auf, der während des Drehvorganges hoch genug ausgehoben werden muss, damit keine Bauteile des drehenden Teiles des Anbaudrehpfluges mit dem Boden kollidieren können. Weist der Anbaudrehpflug mehr als vier Körperpaare auf, hilft häufig nur noch eine Einschwenkvorrichtung, mit der der Pflugrahmen entsprechend hoch eingeschwenkt wird. Mit Einschwenken ist üblicherweise das Verschwenken des schräg gestellten Pflugrahmens in Richtung der gedachten Verlängerung der Drehachse gemeint. Wird der Pflugrahmen dabei zu gering eingeschwenkt, können Bauteile des Drehpfluges, wie zum Beispiel das Stützrad oder das hintere Ende des Pflugrahmens, den Boden berühren und beschädigt werden. Bei einer zu großen Einschwenkbewegung des Pflugrahmens kann der Pflugrahmen oder können Teile des drehenden Teils des Drehpfluges gegen den Pflugturm bzw. das Drehwerk stoßen und ebenfalls Schäden verursachen. Ein derartiger Anbaudrehpflug ist dem deutschen Gebrauchsmuster GM 77 26 689 zu entnehmen. Der Pflugrahmen wird hier über einen Hydraulikzylinder eingeschwenkt, wobei über Anschläge die Ein- und Ausschwenkbewegungen bedingt begrenzbar sind. Wird allerdings die Vorderfurchenbreite verändert, so wird auch zumindest der Freiraum zwischen dem drehenden Teil des Pfluges und dem Boden verändert. Aus der FR-A-2 517 506 ist ein Anbaudrehpflug mit einer Einschwenkbegrenzung bekannt. Diese baut jedoch vergleichsweise voluminös, so dass der für das Drehen des Pflugrahmens benötigte Freiraum eingeschränkt ist. Ein weiterer Anbaudrehpflug, bei dem der Pflugrahmen vor Erreichen der halbgedrehten Pflugrahmenstellung eingeschwenkt wird, ist der deutschen Patentanmeldung DE 3 151 302 A1 zu entnehmen. Die Einschwenkhöhe ist dabei je nach Einstellung der Vorderfurchenbreite unterschiedlich. Eine Veränderung der Vorderfurchenbreite hat um den gleichen Betrag eine Veränderung der Aushubhöhe zur Folge. Insbesondere eine Vergrößerung der Vorderfurchenbreite reduziert hier auch um den gleichen Betrag die Aushubhöhe und damit den Freiraum zwischen dem drehenden Teil des Anbaudrehpfluges und dem Boden. Der Hydraulikzylinder für das Einschwenken des Pflugrahmens muss dafür einen entsprechend großen Arbeitshub aufweisen. Umgekehrt müssen die Teile des drehenden Teiles des Anbaudrehpfluges in einem ausreichend großen Abstand zum Pflugturm angeordnet werden, damit sie nicht mit dem Pflugturm kollidieren können. Es sind auch Anbaudrehpflüge sowie sogenannte Hybridpflüge mit elektronischen Steuerungen bekannt, bei denen die Einschwenkbewegung des Pflugrahmens über Sensoren erfasst wird. Die Einschwenkbewegung wird erst dann beendet, wenn der Pflugrahmen eine vorgegebene ausreichend weit eingeschwenkte Position erreicht hat. Sowohl softwaremäßig als auch hardwaremäßig sind aber solche Lösungen der Einschwenkbegrenzung relativ aufwendig und wartungsintensiv.

Aufgabe der Erfindung ist es, einen Anbaudrehpflug mit einer einfach bauenden Einschwenkbegrenzung zu schaffen, welche den nötigen Freiraum des Pflugrahmens während des Drehvorganges gewährleistet.

Die Aufgabe der Erfindung wird mit den Merkmalen des Patentanspruchs 1 gelöst.

Durch den im Moment des Anschlagens erzeugten Momentanpol in dem Bereich des Anbaudrehpfluges, der in Fahrtrichtung den annähernd gleichen horizontalen Abstand zum Pflugturm aufweist wie der drehende Teil des Anbaudrehpfluges, der während des Drehvorganges den geringsten vertikalen Abstand zum Boden aufweist, wird sichergestellt, dass praktisch alle Einstellungen am Anbaudrehflug hinsichtlich Vorderfurchenbreite, Zugpunkt und Arbeitsbreite pro Pflugkörper weitestgehend keinen Einfluss auf die Aushubhöhe des Pflugrahmens oder den Freiraum haben, der zwischen dem drehenden Teil des Anbaudrehpfluges und dem Boden verbleibt. Der Freilauf des Begrenzungsanschlages sorgt dafür, dass nach einer begrenzten Einschwenkbewegung in Einschwenkrichtung die in entgegen gesetzte Richtung ausgeführte Ausschwenkbewegung frei, also nicht durch den Begrenzungsanschlag begrenzt, ausgeführt werden kann.

Eine bevorzugte Ausführungsform der Erfindung sieht vor, dass die Einstellvorrichtung aus einem konvergierenden Lenkergetriebe besteht, das aus einem tragenden Hauptlenker und einem Zusatzlenker besteht, deren gedachte Verlängerungen sich vor dem Pflugturm schneiden, vorzugsweise in dem Abstand in Fahrtrichtung zum Pflugturm, in dem sich auch die gedachten Verlängerungen der Unterlenker des Traktors schneiden, wobei die Lage des Hauptlenkers und des Zusatzlenkers des konvergierenden Lenkergetriebes über einen Einstelllenker veränderbar ist und eine Änderung der Einstellung des Einstelllenkers eine Verschwenkung des Pflugrahmens um einen zweiten Drehpunkt zur Folge hat, der aus dem Momentanpol des konvergierenden Lenkergetriebes mit Hauptlenker und Zusatzlenker gebildet wird. Durch diese Anordnung des konvergierenden Lenkergetriebes führt jede Veränderung der Lage dieses konvergierenden Lenkergetriebes mittels Einstelllenker zu einer Veränderung der Lage des Pflugturms, der Unterlenker des Traktors und des Zugpunktes, der durch den Schnittpunkt oder Momentanpol der gedachten Verlängerungen der Unterlenker des Traktors gebildet wird, allerdings wird eine eingestellte Vorderfurchenbreite nicht verändert. Der Vorteil einer Einstellvorrichtung, bei der eine eingestellte Vorderfurchenbreite nicht durch eine Veränderung des Zugpunktes verändert wird, kann so in die erfindungsgemäße Lösung integriert werden.

Die Erfindung sieht vorteilhaft vor, dass der Begrenzungsanschlag als Zuglenker ausgebildet ist, mit dem der Einschwenkweg des Pflugrahmens begrenzt wird, wobei die gedachte Verlängerung des Zuglenkers und die gedachte Verlängerung des Hauptlenkers sich hinter dem Pflugturm schneiden, vorzugsweise in dem Bereich des drehenden Teils des Anbaudrehpfluges, der während des Drehvorganges den geringsten Abstand zum Boden aufweist. Durch diese Anordnung wird sichergestellt, dass der Pflugrahmen oder der drehende Teil des Pfluges sich bei Einstellungen über den Einstelllenker um den Schnittpunkt verschwenken. Da sich dort der für den Freiraum zwischen Pflug und Boden kritischste weil engste Bereich befindet, der aber von den Einstellungen nicht beeinflusst wird, haben diese Einstellungen und auch andere Einstellungen ebenfalls keinen Einfluss auf die Bodenfreiheit. Der Zuglenker ist in der Länge begrenzt und weist einen Freilauf auf, der die Einstellungen der anderen Stellteile nicht behindert, die unter anderem zu einer Verschwenkung des Pflugrahmens um den ersten Drehpunkt führen.

Wenn der Freilauf des Begrenzungsanschlages oder des Zuglenkers als Langloch ausgebildet ist, ist eine besonders einfach bauende Ausführungsform für einen wirksamen Freilauf realisiert.

Die Erfindung sieht weiter vorteilhaft vor, dass der Zuglenker als Kette, Seil oder Band ausgebildet ist. Aus baulichen Gründen kann als Zuglenker eine Kette, ein Seil oder auch ein Band eingesetzt werden, die den Schwenkweg wirksam begrenzen, aber auch als einfacher Freilauf dienen können. Andere Bauformen als Zuglenker mit Freilauf sind ebenfalls denkbar.

Die Erfindung zeichnet sich insbesondere dadurch aus, dass ein Anbaudrehpflug geschaffen ist, bei dem die Einschwenkbegrenzung einfach und kostengünstig aufgebaut ist, gerade in Kombination mit dem Lenkergetriebe mit Zuglenker und dem konvergierenden Lenkergetriebe mit Zusatzlenker. Der Pflug kann einfach eingestellt, aber auch insbesondere bei großen Veränderungen der vorhandenen Einstellvorrichtungen immer ausreichend hoch eingeschwenkt werden, ist kompakt und einfach aufgebaut und stellt auch hinsichtlich der Schwerpunktlage keine besonderen Anforderungen an den Traktor. Beim Drehvorgang weist der drehende Teil des Pflugrahmens immer einen ausreichenden Abstand zum Boden auf und es verbleibt immer ein möglichst konstanter Freiraum zwischen dem drehenden Teil des Pflugrahmens und dem Boden. Gewährleistet ist außerdem, dass der drehende Teil des Pflugrahmens immer einen günstigen Schwerpunktsabstand zum Pflugturm aufweist und damit äußerst dicht am Pflugturm angeordnet ist. Es kommt hinzu, dass der drehende Teil des Pflugrahmens nicht mit stehenden Teilen des Pflugturms oder des Drehwerks kollidieren kann.

Weitere Einzelheiten der Erfindung sind den Figuren und der Figurenbeschreibung zu entnehmen, die eine bevorzugte Ausführung der Erfindung zeigen. Es zeigen:
- Figur 1: eine Draufsicht auf den Anbaudrehpflug in Arbeitsstellung,
- Figur 2: eine Seitenansicht des Anbaudrehpfluges in halbgedrehter Stellung und
- Figur 3: eine weitere Draufsicht auf den Anbaudrehpflug in Arbeitsstellung.

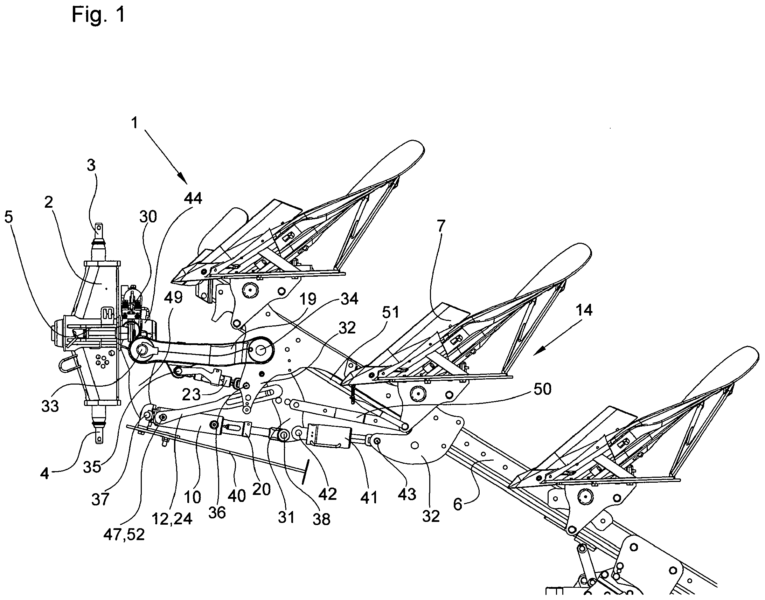

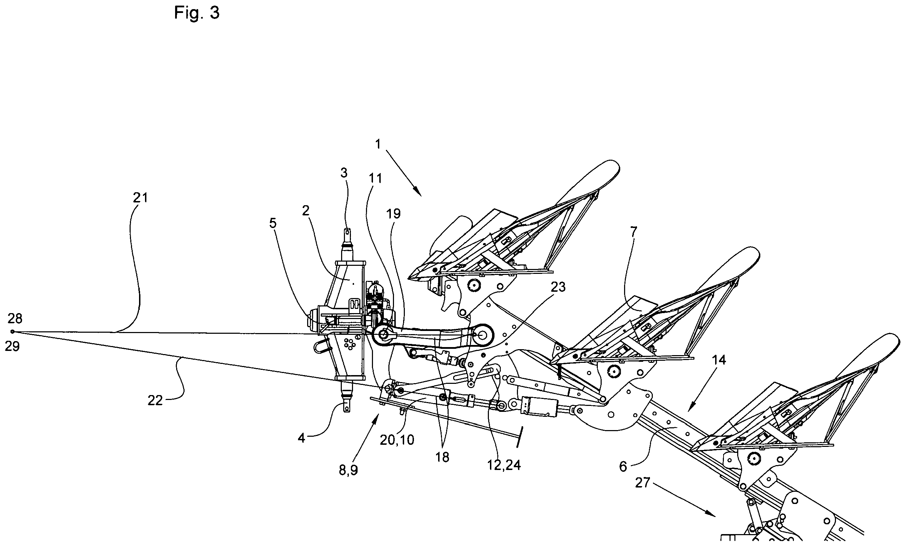

Figur 1 zeigt die Draufsicht des Anbaudrehpfluges 1 mit einem Pflugturm 2, der Anlenkpunkte 3, 4 und 5 für die Verbindung mit dem Dreipunktgestänge eines nicht dargestellten Traktors aufweist. Der Pflugturm 2 nimmt die Drehachse 44 mit dem integrierten Tragkörper 49 auf, an dem der Hauptlenker 19 mittels Lenkerbolzen 33 und der Zusatzlenker 20 mittels Gelenkbolzen 37 horizontal schwenkbar angeordnet sind. Der Pflugrahmen 6 mit seinen Rahmenplatten 32 ist hinten mittels Lenkerbolzen 34 mit dem Hauptlenker 19 ebenfalls horizontal schwenkbar verbunden. Der Lenkerbolzen 34 nimmt auch den Zentrallenker 31 auf, der außen mit dem Zusatzlenker 20 mittels Gelenkbolzen 38 in Verbindung steht. Der Hauptlenker 19 und der Zusatzlenker 20 bilden ein konvergierendes Lenkergetriebe 18, das über den Einstelllenker 23 in seiner Lage verändert werden kann. Der Einstelllenker 23 ist mit dem Bolzen 35 mit dem Hauptlenker 19 und im Abstand zu dem Lenkerbolzen 34 mit den Rahmenplatten 32 bzw. mit dem Pflugrahmen 6 mittels Bolzen 36 verbunden. Am Zentrallenker 31 ist der Hydraulikzylinder 41 mittels Bolzen 42 und hinten an den Tragplatten 32 mittels Bolzen 43 verbunden. Über den Hydraulikzylinder 41, die Lenkstange 50 und die Steuerstange 51 können die drehbar am Pflugrahmen 6 angeordneten Pflugkörper 7 in ihrer Arbeitsbreite verändert werden. Am Tragkörper 49 ist mittels des Bolzens 37 die Abstellstütze 40 befestigt und wahlweise auch der als Begrenzungsanschlag 12 dienende Zuglenker 24, der aber der Einfachheit halber schwenkbar mit den verstärkten Schlauchanschlussstutzen 47 oder von der Funktion her vergleichbaren Lagerzapfen 52 des als Zusatzlenker 20 dienenden Hydraulikzylinders 10 verbunden ist. Weitere Einzelheiten zum Zuglenker 24 sind der Beschreibung zu Figur 3 zu entnehmen. Über den Hydraulikzylinder 30, der an die Drehachse 44 angreift und sich am Pflugturm 2 abstützt, wird der Pflugrahmen 6 bzw. der drehende Teil des Pflugrahmens 14 gedreht.

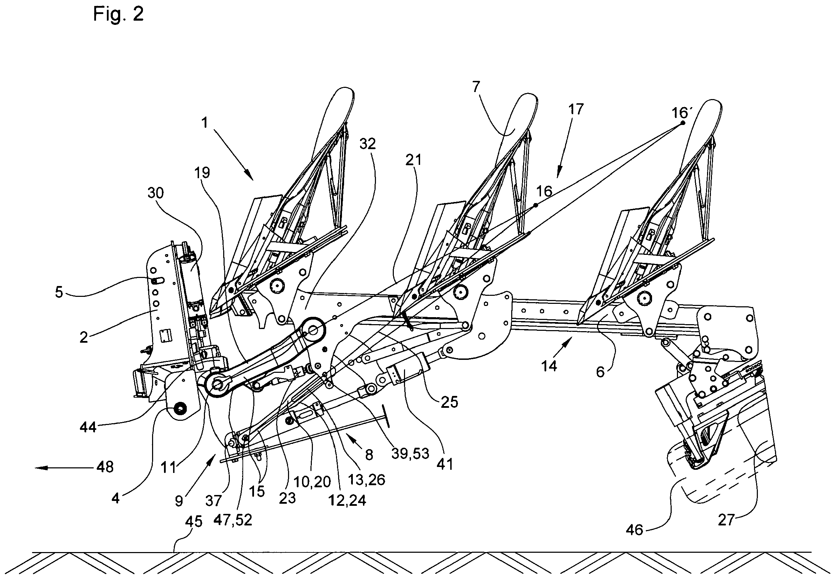

Figur 2 zeigt eine Seitenansicht des Anbaudrehpfluges 1 in halbgedrehter Stellung, mit über die Schwenkvorrichtung 9 vollständig eingeschwenktem Pflugrahmen 6. Dabei bildet der Pflugrahmen 6 mit seinen Rahmenplatten 32, dem Hauptlenker 19 und dem Einstelllenker 23 eine Baueinheit, die über den als Zusatzlenker 20 dienenden Hydraulikzylinder 10 um den ersten Drehpunkt 11 zur Erzielung eines ausreichenden Freiraums zwischen dem drehenden Teil 14 des Anbaudrehpfluges 1 und dem Boden 45 eingeschwenkt wird. Die Einschwenkbewegung bzw. der Einschwenkweg wird über den Begrenzungsanschlag 12 begrenzt. Als Begrenzungsanschlag 12 dient hier der Zuglenker 24, der im Bereich des Gelenkbolzens 37 mit den Schlauchanschlussstutzen 47 des Hydraulikzylinders 10 schwenkbar verbunden ist. Der Zuglenker 24 ist hinten mit dem Anschlagbolzen 39 mit der Rahmenplatte 32 verbunden. Zusammen mit dem Hauptlenker 19 bildet der Zuglenker 24 ein Lenkergetriebe 15, das nur im Moment der Begrenzung der Schwenkbewegung des Pflugrahmens 6 wirksam wird und einen Momentanpol 16 bildet. Dieser Momentanpol 16 befindet sich in diesem Fall hinter dem zweiten Pflugkörper 7 in dem Abstand zum Pflugturm 2, in dem sich auch im Normalfall bei einem vierfurchigen Anbaudrehpflug 1 während des Drehvorganges der tiefste Punkt zwischen Stützrad 27 und Boden 45 befindet. In der Rahmenplatte 32 befinden sich für die Verbindung mit dem Zuglenker 24 mehrere Bohrungen 53, die für den Anschlagbolzen 39 dienen. Durch die entsprechende Wahl der Bohrung 53 kann die Konvergenz des Hauptlenkers 19 und des Zuglenkers 24 zueinander verändert werden und damit auch die Lage des Momentanpols 16 der zum Momentanpol 16' wird, der weiter hinten positioniert ist. Der Zuglenker 24 weist hier einen als Langloch 26 ausgebildeten Freilauf 13 auf, der eine Ausschwenkbewegung des Pflugrahmens 6 und auch Einstellungen während der Arbeit bezüglich der Vorderfurchenbreite über den Zusatzlenker 20, bezüglich des Zugpunktes über den Einstelllenker 23 und Veränderungen der Arbeitsbreite pro Körper über den Hydraulikzylinder 41 nicht behindert. Alle möglichen Einstellungen, zum Beispiel über die Einstellvorrichtung 8 für die Vorderfurchenbreite und den Zugpunkt und auch für die Arbeitsbreite pro Körper mit den Stellteilen 20, 23 und 41 wirken sich im Moment der Schwenkbegrenzung durch den Zuglenker 24 so aus, dass sich die Lage des Pflugrahmens 6 hinsichtlich des Abstandes zum Boden 45 zwar ändert, aber nicht im Bereich des hinteren Momentanpols 16 oder 16', der aus dem Schnittpunkt der gedachten Verlängerung 21 des Hauptlenkers 19 mit der gedachten Verlängerung 25 des Zuglenkers 24 gebildet wird. Zweckmäßigerweise wird die Lage des Zuglenkers 24 so gewählt, dass der Momentanpol 16 dort positioniert ist, wo sich während des Drehvorganges der geringste Abstand zwischen dem drehenden Teil 14 des Anbaudrehpfluges 1 und dem Boden 45 befindet. Meist bildet das während des Drehvorganges umschwenkende Stützrad 27 den tiefsten Punkt des drehenden Teils 14 des Anbaudrehpfluges 1. Das umschwenkende Stützrad 27 weist in Figur 2 das Bezugszeichen 46 auf und ist gestrichelt dargestellt. Im gleichen Abstand zum Pflugturm 2 wie beispielsweise bei einem Anbaudrehpflug mit vier Paaren von Pflugkörpern 7 oder mit fünf Paaren von Pflugkörpern 7 befindet sich der tiefste Punkt häufig im mittleren Bereich 17 des drehenden Teils 14 des Pflugrahmens 6. Somit muss dann der Zuglenker 24 so positioniert werden, dass er mit dem Hauptlenker 19 im Moment der Schwenkbegrenzung dort auch den Momentanpol 16 oder 16' bildet. Der Momentanpol 16 oder 16' muss allerdings bei größeren Anbaudrehpflügen 1, zum Beispiel mit sechs Paar oder sieben Paar Pflugkörpern 7 mehr in den hinteren Bereich des Anbaudrehpfluges 1 positioniert werden, da sich dann der tiefste Punkt des umschwenkenden Stützrades 46 in Fahrtrichtung 48 gesehen in einer nach hinten verlagerten Position befindet. Der Zuglenker 24 muss dann mit der passenden Bohrung 53 der Rahmenplatten 32 mittels Anschlagbolzen 39 verbunden werden.

Figur 3 zeigt eine weitere Draufsicht auf den Anbaudrehpflug 1 in Arbeitsstellung. Sie verdeutlicht auch die Lage des konvergierenden Lenkergetriebes 18 mit dem Hauptlenker 19 und dem Zusatzlenker 20, deren gedachte Verlängerungen 21 und 22 sich vor dem Pflugturm 2 schneiden und den Momentanpol 28 bilden. Vorzugsweise soll der Momentanpol 28 in

Fahrtrichtung 48 den gleichen Abstand zum Pflugturm 2 aufweisen wie der Schnittpunkt der gedachten Verlängerungen der Traktorunterlenker. Der Zusatzlenker 20 muss dann entsprechend zum Hauptlenker 19 angeordnet sein. Bei einer Veränderung der Lage des Lenkergetriebes 18 durch den Einstelllenker 23 wird der Pflugrahmen 6 bzw. der drehende Teil 14 des Anbaudrehpfluges 1 kinematisch um den zweiten Drehpunkt 29 verschwenkt, der auch den Momentanpol 28 bildet. Dies stellt sicher, dass nach einer Einstellung der Vorderfurchenbreite mittels Zusatzlenker 20 eine Zugpunkteinstellung ermöglicht wird, die bekanntlich keine Veränderung der Vorderfurchenbreite zur Folge hat.

## Patentansprüche

1. Anbaudrehpflug (1) mit einem Pflugturm (2) mit Anlenkpunkten (3, 4, 5) für den Anbau an das Dreipunktgestänge eines Traktors, mit einem Pflugrahmen (6) mit mindestens drei Paar Pflugkörpern (7), mit einer Einstellvorrichtung (8) für die Einstellung der Vorderfurchenbreite und des Zugpunktes und mit einer Schwenkvorrichtung (9) mit Hydraulikzylinder (10), mit der der Pflugrahmen (6) mittelbar oder unmittelbar vor oder während des Drehvorganges um einen Drehpunkt in Bezug zum Pflugturm (2) einschwenkbar ist und nach oder während des Drehvorganges wieder ausschwenkbar ist und mit einer Einschwenkbegrenzung, zur Begrenzung des Einschwenkweges des Pflugrahmens (6),
**dadurch gekennzeichnet,**
**dass** die Einschwenkbegrenzung einen Begrenzungsanschlag (12) mit Freilauf (13) umfasst, der neben der Begrenzung der Schwenkbewegung des drehenden Teils (14) des Anbaudrehpfluges (1) um einen ersten Drehpunkt (11) auch Teil eines Lenkergetriebes (15) ist, dessen Momentanpol (16,16') hinter dem Pflugturm (2) angeordnet ist wobei der Momentanpol (16,16') in der Anschlagstellung in Fahrtrichtung (48) gesehen zum Pflugturm (2) den annähernd gleichen Abstand aufweist, wie der drehende Teil (14) des Anbaudrehpfluges (1), der während des Drehvorganges den geringsten Abstand zum Boden (45) aufweist.

2. Anbaudrehpflug nach Anspruch 1,
**dadurch gekennzeichnet,**
**dass** die Einstellvorrichtung (8) aus einem konvergierenden Lenkergetriebe (18) besteht, das aus einem tragenden Hauptlenker (19) und einem Zusatzlenker (20) besteht, deren gedachte Verlängerungen (21, 22) sich vor dem Pflugturm (2) schneiden, vorzugsweise in dem Abstand in Fahrtrichtung (48) zum Pflugturm (2), in dem sich auch die gedachten Verlängerungen der Unterlenker des Traktors schneiden, wobei die Lage des Hauptlenkers (19) und des Zusatzlenkers (20) des konvergierenden Lenkergetriebes (18) über einen Einstelllenker (23) veränderbar ist, wobei eine Änderung der Einstellung des Einstelllenkers (23) eine Verschwenkung des Pflugrahmens (6) um einen zweiten Drehpunkt zur Folge hat, der aus dem Momentanpol (28) des konvergierenden Lenkergetriebes (18) mit Hauptlenker (19) und Zusatzlenker (20) gebildet wird.

3. Anbaudrehpflug nach Anspruch 1 oder 2,
**dadurch gekennzeichnet,**
**dass** der Begrenzungsanschlag (12) als Zuglenker (24) ausgebildet ist, mit dem der Einschwenkweg des Pflugrahmens (6) begrenzt wird, wobei die gedachte Verlängerung (25) des Zuglenkers (24) und die gedachte Verlängerung (21) des Hauptlenkers (19) sich hinter dem Pflugturm (2) schneiden, vorzugsweise in dem Bereich des drehenden Teils (14) des Anbaudrehpfluges (1), der während des Drehvorganges den geringsten Abstand zum Boden (45) aufweist.

4. Anbaudrehpflug nach Anspruch 1 oder 3,
**dadurch gekennzeichnet,**
**dass** der Freilauf (13) des Begrenzungsanschlages (12) oder des Zuglenkers (24) als Langloch (26) ausgebildet ist.

5. Anbaudrehpflug nach Anspruch 3,
**dadurch gekennzeichnet,**
**dass** der Zuglenker (24) als Kette, Seil oder Band ausgebildet ist.

## Claims

1. Mounted reversible plough (1) with a headstock (2) with top link attachment points (3, 4, 5) for mounting on the three-point linkage of a tractor, with a plough frame (6) with at least three pairs of plough bodies (7), with an adjusting device (8) for adjusting the front furrow width and the traction point and with a swivelling device (9) with a hydraulic ram (10), with which the plough frame (6) is swivelled in directly or indirectly before during the rotating process around a centre of rotation with regard to the headstock (2) and swivelled out again after or during the rotating process and with a swivelling limiter with which the swiveling in path of the plough frame (6) is limited,
**characterised in that**
the swivelling limiter comprises a limiting lock (12) with free run (13), which, along with limiting the swivelling movement of the rotating part (14) of the mounted reversible plough (1) around a first centre of rotation (11), is also part of a steering gear (15) whose instantaneous centre of rotation (16, 16') is located behind the headstock (2) whereby the instantaneous centre of rotation (16, 16') in the limit position seen in the direction of travel (48) has practically the same distance to the headstock (2) as the rotating part (14) of the mounted reversible plough (1).

2. Mounted reversible plough in accordance with claim 1,
**characterised in that**
the adjusting device (8) consists of a converging steering gear (18), which consists of a supporting main link (19) and an additional link (20), whose imaginary extensions (21, 22) intersect in front of the headstock (2), preferably at the distance in the direction of travel (48) from the headstock (2) at which the imaginary extensions of the tractor's lower links intersect as well, whereby the position of the main link (19) and of the additional link (20) of the converging steering gears (18) can be changed by means of an adjusting link (23), whereby a change of the setting of the adjusting links (23) causes the plough frame (6) to swivel around a second centre of rotation, which is formed from the instantaneous centre of rotation (28) of the converging steering gears (18) with main link (19) and additional link (20).

3. Mounted reversible plough in accordance with claim 1 or 2,
**characterised in that**
the limiting lock (12) is designed as a tension link (24) with which the swivelling path of the plough frame (6) is limited, whereby the imaginary extension (25) of the tension links (24) and the imaginary extension (21) of the main link (19) intersect behind the headstock (2), preferably in the area of the rotating part (14) of the mounted reversible plough (1) that has the lowest distance from the ground (45) during the rotating process.

4. Mounted reversible plough in accordance with claim 1 or 3,
**characterised in that**
the free run (13) of the limiting lock (12) or of the tension links (24) is designed as a slot (26).

5. Mounted reversible plough in accordance with claim 3,
**characterised in that**
the tension link (24) is designed as a chain, cable or belt.

## Revendications

1. Charrue réversible portée (1) avec une tête d'attelage (2) avec des points d'attache (3, 4, 5) pour la fixation à l'attelage trois points d'un tracteur, avec un châssis de charrue (6) avec au moins trois paires de corps (7), avec un dispositif de réglage (8) pour régler la largeur de la première corps et le point de traction et avec un dispositif pivotant (9) avec vérin hydraulique (10), avec lequel le châssis de charrue (6) peut pivoter indirectement ou directement avant ou pendant le pivotement autour d'un point de pivotement par rapport à la tête d'attelage (2) et peut pivoter à nouveau après ou pendant le pivotement, et avec une limitation de pivotement pour limiter la course de pivotement du châssis de charrue(6),
**caractérisée en ce que**
la limitation de pivotement comprend une butée de limitation (12) à roue libre (13) qui, en plus de limiter le mouvement de pivotement de la partie rotative (14) de la charrue réversible portée (1) autour d'un premier point de pivotement (11), fait également partie d'un mécanisme de direction (15) dont le pôle instantané (16, 16') est disposé derrière la tête d'attelage (2), le pôle instantané (16, 16') en position d'arrêt, vu dans le sens de la marche (48), ayant approximativement la même distance de la tour de charrue (2) que la partie rotative (14) de la charrue réversible portée (1) qui a la plus petite distance du sol (45) pendant le travail en rotation.

2. Charrue réversible portée selon la revendication 1,
**caractérisée en ce que**
le dispositif de réglage (8) est constitué d'un mécanisme de direction convergent (18) qui est constitué d'un bras principal de support (19) et d'un bras supplémentaire (20), dont les prolongements imaginaires (21, 22) se coupent devant la tête d'attelage (2), de préférence à distance dans le sens du déplacement (48) de la tête d'attelage (2) dans lequel se coupent aussi les prolongements imaginaires des bras inférieurs du tracteur, dans laquelle la position du bras principal (19) et du bras supplémentaire (20) de le mécanisme de direction convergent (18) peut être modifié par l'intermédiaire d'un bras de réglage (23), une modification du réglage du bras de réglage (23) provoquant un pivotement du châssis (6) autour d'un deuxième point de pivotement qui est formé par le bras principal (19) et le bras supplémentaire (20), du pôle instantané (28) du mécanisme de direction convergent (18), le châssis (6) étant entraîné en rotation.

3. Charrue réversible portée selon la revendication 1 ou 2,
**caractérisée en ce que**
la butée de limitation (12) se présente sous la forme d'un bras tirant (24) avec laquelle la course de pivotement du châssis de charrue (6) est limitée, l'extension imaginaire (25) du bras de tirant (24) et l'extension imaginaire (21) du bras principal (19) se coupant derrière la tête d'attelage (2), de préférence dans la partie rotative (14) de la charrue portée (1) qui présente la distance la plus faible du sol (45) en rotation.

4. Charrue réversible portée selon la revendication 1 ou 3,
**caractérisée en ce que**
la roue libre (13) de la butée de fin de course (12) ou du bras tirant (24) est réalisé sous la forme d'un trou oblong (26).

5. Charrue réversible portée selon la revendication 3,
**caractérisée en ce que**
le bras tirant (24) se présente sous la forme d'une chaîne, d'un câble ou d'une bande.
